# EUROPEAN PATENT APPLICATION

(11) **EP 4 550 469 A2**
(43) Date of publication of application: **07.05.2025**
(21) Application number: 24208149.5
(22) Date of filing: 22.10.2024
(51) Int. Cl.: H01M 4/525, H01M 4/131, H01M 4/1391, H01M 4/36

(54) **POSITIVE ELECTRODE ACTIVE MATERIAL FOR SECONDARY BATTERY**

(30) Priority: 30.10.2023 KR 20230147124
(71) Applicant: ECOPRO BM CO., LTD., Cheongju-si, Chungcheongbuk-do 28117 (KR)
(72) Inventor: KIM, Sang Hyeok, 28116 Cheongju-si, Chungcheongbuk-do (KR); SHIN, Jong Seung, 28116 Cheongju-si, Chungcheongbuk-do (KR); BAE, Jin Ho, 28116 Cheongju-si, Chungcheongbuk-do (KR); SHIN, Jae Hoon, 28116 Cheongju-si, Chungcheongbuk-do (KR); LEE, Hye Rim, 28116 Cheongju-si, Chungcheongbuk-do (KR); KIM, Jin Kyu, 28116 Cheongju-si, Chungcheongbuk-do (KR)
(74) Representative: Vossius & Partner Patentanwälte Rechtsanwälte mbB

(57) **Abstract**

A positive electrode active material particle according to one aspect of the present invention may include a lithium composite oxide particle and a coating material including a coating element, in which the lithium composite oxide particle is a secondary particle formed by aggregation of two or more primary particles, the coating material is included on a surface of the secondary particle, the coating material is included in a grain boundary between the primary particles, calcium (Ca) is included in the positive electrode active material particle, and a calcium (Ca) content X included in the positive electrode active material is 0.003 mol% ≤ X ≤ 0.03 mol%.

## Description

### Technical Field

The present invention relates to a positive electrode active material for a secondary battery, and more particularly, to a positive electrode active material particle including a lithium composite oxide particle and a coating material and a positive electrode active material including the same.

### Background

With the development of portable mobile electronic devices such as smart phones, MP3 players, and tablet PCs, there has been an explosively increasing demand for secondary batteries capable of storing electrical energy. In particular, with the advent of electric vehicles, mid- to large-sized energy storage systems, and portable devices requiring a high energy density, there has been an increasing demand for lithium secondary batteries.

As a lithium composite oxide included in a positive electrode active material, the most popular substance in recent years is a lithium nickel manganese cobalt oxide, Li(NiₓCo_{y}Mn_{z})O₂ (in which the x, y, and z are atomic fractions of independent oxide composition elements, respectively, and are 0<x≤1, 0<y≤1, 0<z≤1, and 0<x+y+z≤1). This substance for the positive electrode active material has an advantage of producing high capacity because the substance is used at a voltage higher than that of LiCoO₂, which has been actively studied and used as the positive electrode active material, and has an advantage of a low price because a Co content is relatively low.

However, this lithium composite oxide is subject to a volume change according to intercalation and deintercalation of lithium ions during charging and discharging. There is a problem in that the volume of primary particles of the lithium composite oxide rapidly changes during charging and discharging, cracks occur in secondary particles according to repeated charging and discharging, or a crystal structure is subject to collapse or phase transition.

In order to compensate for these disadvantages, there has been a newly emerging demand for a high nickel-based positive electrode active material, which is a Ni-rich system having a nickel (Ni) content of 50 mol% or more based on the total content of transition metals excluding lithium (Li) as a positive electrode active material for a secondary battery. However, the positive electrode active material of this Ni-rich system has an advantage of high energy density, but as the Ni content increases, there is a problem in that lifespan properties at room temperature and high temperature are rapidly deteriorated due to an increase in structural instability by Li/Ni cation mixing, a physical disconnection of internal particles by microcrack, deepening of electrolyte depletion, and the like.

### Detailed Description of the Invention

### Technical Problem

The present invention has been made in an effort to solve the problems of a conventional grain boundary coating method and to improve a lifespan performance of a battery by adding calcium (Ca) as a dopant in a specific content and through a specific manufacturing method during the manufacture of a positive electrode active material to diffuse a coating element into positive electrode active material particles, thereby controlling a concentration of the coating element on a surface portion of the positive electrode active material particle, and performing grain boundary coating between lithium composite oxide primary particles.

### Technical Solution

A positive electrode active material particle according to one aspect of the present invention may include a lithium composite oxide particle and a coating material including a coating element, in which the lithium composite oxide particle is a secondary particle formed by aggregation of two or more primary particles, the coating material is included on a surface of the secondary particle, the coating material is included in a grain boundary between the primary particles, calcium (Ca) is included in the positive electrode active material particle, and a calcium (Ca) content X included in the positive electrode active material is 0.003 mol% ≤ X ≤ 0.03 mol%.

In one aspect, the positive electrode active material particle may include the coating element, and an average concentration Y of the coating element measured by Energy Profiling-Energy Dispersive X-Ray Spectroscopy (EP-EDS) which measures an average concentration of the element from a surface of the positive electrode active material particle to a depth at which an electron beam penetrates using the electron beam irradiated at an acceleration voltage of 3 kV with respect to the surface of the positive electrode active material particle may be 32 at% ≤ Y ≤ 37 at%.

In one aspect, the coating element may be cobalt (Co) and the coating material may be a cobalt (Co) oxide.

In one aspect, the positive electrode active material particle may include cobalt (Co), and an average concentration Y of cobalt (Co) measured by Energy Profiling-Energy Dispersive X-Ray Spectroscopy (EP-EDS) which measures an average concentration of the element from a surface of the positive electrode active material particle to a depth at which an electron beam penetrates using the electron beam irradiated at an acceleration voltage of 3 kV with respect to the surface of the positive electrode active material particle may be 32 at% ≤ Y ≤ 37 at%.

In one aspect, the calcium (Ca) may be included in a form of a calcium (Ca) oxide on the surface of the secondary particle in the positive electrode active material particle.

In one aspect, the calcium (Ca) may be included in a form of a calcium (Ca) oxide in the grain boundary between the primary particles in the positive electrode active material particle.

A positive electrode active material according to one aspect of the present invention may include a plurality of the positive electrode active material particles.

In one aspect, a positive electrode active material included in the positive electrode active material may be a first positive electrode active material particle having an average particle diameter (D50) of 8 µm or more, and the positive electrode active material may further include a second positive electrode active material particle having an average particle diameter (D50) of 7 µm or less.

In one aspect, w1/w2 may be 1.5 to 9.0 or less when a weight of the first positive electrode active material particles is w1 and a weight of the second positive electrode active material particles is w2.

A positive electrode according to one aspect of the present invention may include the positive electrode active material particle.

A secondary battery according to one aspect of the present invention may include the positive electrode active material particle.

### Advantageous Effects

The present invention can have one effect of enhancing a lifespan performance of a battery by controlling a content of a coating element on a surface portion of a positive electrode active material particle and coating a grain boundary through a method in which the problems of a conventional grain boundary coating method are solved.

### Brief Description of the Drawings

FIG. 1 is a view showing a calcium (Ca)-doping method according to an embodiment of the present prevention.
FIG. 2 is a sectional EDS image of a positive electrode active material particle according to a comparative example and an embodiment of the present invention.
FIG. 3 is a view showing an X-ray diffraction (XRD) analysis result of a positive electrode active material particle according to an embodiment of the present invention using CuKα rays.

### Mode for Invention

As used herein, expressions such as "including" may need to be understood as openended terms which imply the possibility of including other components.

As used herein, "preferred" and "preferably" may refer to embodiments of the present invention which may provide specific advantages under specific circumstances. However, they are not intended to exclude other embodiments from the scope of the present invention.

In addition, the singular form used in the specification and the appended claims may be intended to include a plural form unless otherwise indicated in the context.

Meanwhile, technical features described below relate to one aspect of achieving the desired effect of the present invention as described above.

In other words, a positive electrode active material particle according to one aspect of the present invention may include technical features according to one aspect described below, and thus may remarkably improve battery properties when applied to a secondary battery.

The present invention relates to a positive electrode active material particle for a secondary battery and a positive electrode active material including a plurality of particles thereof, and the secondary battery of the present invention is not limited in the kind thereof as long as it is a battery which converts external electric energy into a form of chemical energy and stores the chemical energy to be reused. As one more preferred example, the present invention may relate to a positive electrode active material for a lithium ion secondary battery.

With regard to a nickel-based positive electrode active material, particularly, a high-Ni-based positive electrode active material, coating may improve a battery performance such as lifespan and resistance, and in particular, this advantage may be maximized in the case of a grain boundary coating between primary particles.

For this grain boundary coating, a method of diffusing a coating material into particles at a specific temperature for heat treatment was performed. However, there is a problem caused by a change in the heat treatment temperature for performing the grain boundary coating and a problem in that a battery performance deteriorates due to a change in physical properties such as deformation of primary particles.

The present invention has been made in an effort to solve the problems of this grain boundary coating in such a way that calcium (Ca) is added as a dopant in a specific content and through a specific preparation method, thereby diffusing a coating element, particularly cobalt (Co), into the inside of the positive electrode active material particle to be coated on a grain boundary between the primary particles and controlling a content of the coating element on a surface portion of the positive electrode active material particle, so as to enhance a battery performance.

One positive electrode active material particle according to one aspect of the present invention may include one lithium composite oxide particle.

In addition, the lithium composite oxide particle may be a secondary particle formed by aggregation of two or more primary particles.

Furthermore, the positive electrode active material particle may include a coating material including a coating element.

Meanwhile, in the present specification, the lithium composite oxide particle and the coating material may be distinguished from each other.

When the lithium composite oxide particle according to one aspect of the present invention is subjected to coating treatment, a portion of the coating element may be present in a lattice structure of the primary particle included in the lithium composite oxide particle. This may be expressed as the coating element being doped in the lithium composite oxide particle, and the lithium composite oxide particle may be defined to include all regions doped as described above.

In another aspect, when the lithium composite oxide particle according to one aspect of the present invention is subjected to coating treatment, a portion of the coating element may form a coating material. This coating material may be present on a surface of the secondary particle of the lithium composite oxide particle and/or at a grain boundary between the lithium composite oxide primary particles.

In this case, the grain boundary between the primary particles may mean a region including both a space between the primary particles and a region on a surface of the primary particles.

In other words, in the present specification, a doping region in a lattice structure of the lithium composite oxide primary particle of the positive electrode active material particle, a region on a surface of the lithium composite oxide secondary particle, and a grain boundary region between the lithium composite oxide primary particles may be all distinguished regions from each other.

Meanwhile, in the present specification, the terms "element", "calcium (Ca)", and "cobalt (Co)" may be interpreted to include both a zero-valent state and an ion state.

In one aspect, the lithium composite oxide particle may include nickel (Ni).

In one aspect, the lithium composite oxide particle may further include any one or more selected from cobalt (Co), aluminum (Al), and manganese (Mn).

In one aspect, the lithium composite oxide particle may be represented by formula 1 below.

[Formula 1] LiₐNiₓCo_{y}M_{1-x-y}O₂

In above formula 1, M may be selected from the group consisting of Zr, Mn, Al, B, Ba, Ce, Cr, F, Mg, V, Ti, Fe, Zn, Si, Y, Nb, Ga, Sn, Mo, W, P, Sr, and a combination thereof, and may be 0.9≤a≤1.2, 0.5≤x≤1.0, 0.0≤y≤0.4, and 0.0≤1-x-y≤0.4.

In one aspect, the lithium composite oxide particle may be represented by formula 1-1 below.

[Formula 1-1] Li_{a'}Ni_{x'}Co_{y'}M1_{z'}M2_{1-x'-y'-z'}>O₂

In above formula 1-1, M1 may be Al or Mn, M2 may be selected from the group consisting of Zr, B, Ba, Ce, Cr, F, Mg, V, Ti, Fe, Zn, Si, Y, Nb, Ga, Sn, Mo, W, P, Sr, and a combination thereof, and may be 0.9≤a'≤1.2, 0.5≤x'≤1.0, 0.0≤y'<0.4, 0.0≤z'≤0.4, and 0.0≤1-x'-y'-z'≤0.4.

In one aspect, in above formula 1 and/or formula 1-1, a and/or a', which means a mol% of lithium (Li) based on a mol% of all transition metals excluding lithium (Li), may be 0.9 or more, 1.0 or more, 1.2 or less, 1.1 or less, or 1.05 or less.

In one aspect, in above formula 1 and/or formula 1-1, x and/or x', which means a mol% of nickel (Ni) based on a mol% of all transition metals excluding lithium (Li), may be 0.5 or more, 0.6 or more, 0.7 or more, 0.8 or more, or 0.9 or more. In particular, x and/or x' may be a high nickel-based oxide which is 0.8 or more, or 0.9 or more.

In one aspect, in above formula 1 and/or formula 1-1, y and/or y', which means a mol% of cobalt (Co) based on a mol% of all transition metals excluding lithium (Li), may be 0.4 or less, 0.3 or less, 0.2 or less, or 0.1 or less.

A crystal structure of the lithium composite oxide particle according to one aspect of the present invention may be a hexagonal α-NaFeO₂ (R-3 m space group).

Then, the positive electrode active material particle according to one aspect of the present invention may include a coating material including a coating element.

As one example, the coating material may be a coating oxide.

In one aspect, the coating material may be represented by formula 2 below.

[Formula 2] LiₚM3_{q}Oᵣ

In above formula 2, M3 may be at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd, and Nd, and may be 0≤p≤10, 0<q≤8, and 2≤r≤13.

As one example, in above formula 2, M3 may refer to a coating element, and the coating oxide may be a composite oxide of lithium and an element represented by M3, or an oxide of M3.

As one example, the coating oxide may be LiₚCo_{q}Oᵣ, LiₚW_{q}Oᵣ, LiₚZr_{q}Oᵣ, LiₚTi_{q}Oᵣ, LiₚNi_{q}Oᵣ, LiₚAl_{q}Oᵣ, LiₚMo_{q}Oᵣ, Co_{q}Oᵣ, Al_{q}Oᵣ, W_{q}Oᵣ, Zr_{q}Oᵣ, Ti_{q}Oᵣ, B_{q}Oᵣ, Liₚ(W/Ti)_{q}Oᵣ, Liₚ(W/Zr)_{q}Oᵣ, Liₚ(W/Ti/Zr)_{q}Oᵣ, Liₚ(W/Ti/B)_{q}Oᵣ, but is not limited thereto.

The coating oxide may include a concentration gradient part in which a molar concentration of an element contained in the coating oxide varies. As one example, when the coating oxide includes lithium, a molar concentration of lithium may vary. In addition, as one example, at least one molar concentration of M3 included in the coating oxide may vary.

In one aspect, the coating material may be included on a surface of the lithium composite oxide secondary particle and in a grain boundary between the lithium composite oxide primary particles.

Meanwhile, in one aspect, the coating element may be included in the coating material included on the surface of the lithium composite oxide secondary particle.

In addition, in one aspect, the coating element may be included in the coating material included in a grain boundary between the lithium composite oxide primary particles.

Furthermore, in one aspect, the coating element may be doped and included in a lattice structure of the lithium composite oxide primary particle rather than the coating material.

In one more preferred aspect, the positive electrode active material particle may include the coating element, and an average concentration Y of the coating element measured by Energy Profiling-Energy Dispersive X-Ray Spectroscopy (EP-EDS) which measures an average concentration of the element from a surface of the positive electrode active material particle to a depth at which an electron beam penetrates using the electron beam irradiated at an acceleration voltage of 3 kV with respect to the surface of the positive electrode active material particle may be 32 at% or more, 33 at% or more, 34 at% or more, 35 at% or more, 37 at% or less, or 36 at% or less.

In the present invention, calcium (Ca) may be added as a dopant in a specific content and through a specific preparation method, and thus a coating element may be diffused into the inside of the positive electrode active material particle to adjust a concentration of the coating element on a surface portion of the positive electrode active material particle to 32 at% ≤ Y ≤ 37 at%, thereby enhancing a lifetime performance of a battery.

In one more preferred aspect, the coating element may be cobalt (Co) and the coating material may be a cobalt (Co) oxide.

Meanwhile, in the present specification, the coating oxide may be an oxide including a coating element, and may include all cases in which other elements are further included. The cobalt (Co) oxide may be an oxide including cobalt (Co), and may include all cases in which other elements are further included.

As one example, the cobalt (Co) oxide may be included as a LiₚCo_{q}Oᵣ, Co_{q}Oᵣ, and/or LCO-like structure. Meanwhile, the LCO-like structure may be an intermediate which may be present in the process of forming a cobalt (Co) oxide of LiCoO₂, and may be, for example, an amorphous structure or a spinel structure.

In one aspect, the cobalt (Co) oxide may be included on a surface of the lithium composite oxide secondary particle and in a grain boundary between the lithium composite oxide primary particles.

Meanwhile, in one aspect, the cobalt (Co) may be included in the cobalt (Co) oxide included on the surface of the lithium composite oxide secondary particle.

In addition, in one aspect, the cobalt (Co) may be included in the coating material included in a grain boundary between the lithium composite oxide primary particles.

Furthermore, in one aspect, the cobalt (Co) may be doped and included in a lattice structure of the lithium composite oxide primary particle rather than the coating material.

In one more preferred aspect, the positive electrode active material particle may include the cobalt (Co), and an average concentration Y' of the cobalt (Co) measured by Energy Profiling-Energy Dispersive X-Ray Spectroscopy (EP-EDS) which measures an average concentration of the element from a surface of the positive electrode active material particle to a depth at which an electron beam penetrates using the electron beam irradiated at an acceleration voltage of 3 kV with respect to the surface of the positive electrode active material particle may be 32 at% or more, 33 at% or more, 34 at% or more, 35 at% or more, 37 at% or less, or 36 at% or less.

In the present invention, calcium (Ca) may be added as a dopant in a specific content and through a specific preparation method, and thus the cobalt (Co) may be diffused into the inside of the positive electrode active material particle to adjust a concentration of the cobalt (Co) on a surface portion of the positive electrode active material particle to 32 at% ≤ Y ≤ 37 at%, thereby enhancing a lifetime performance of a battery.

Then, the calcium (Ca) may be included in the positive electrode active material particle by being added as a dopant.

In one aspect, the calcium (Ca) may be present in any one or more regions selected from a doping region in a lattice structure of the lithium composite oxide primary particle, a surface of the lithium composite oxide secondary particle, and a grain boundary region between the lithium composite oxide primary particles.

In one aspect, the calcium (Ca) may be present as a calcium (Ca) ion per se when being present at a grain boundary region between the lithium composite oxide primary particles.

In one aspect, the calcium (Ca) may be present in a form of a calcium (Ca) oxide, that is, in a form of various oxides containing calcium (Ca) when being present on a surface of the lithium composite oxide secondary particle and at a grain boundary region between the lithium composite oxide primary particles. As one example, the calcium (Ca) may be present as an amorphous calcium (Ca) composite oxide.

In one aspect, a content X of calcium (Ca) included in the positive electrode active material particle may be 0.003 mol% or more, 0.005 mol% or more, 0.03 mol% or less, or 0.025 mol% or less. In the present invention, the content of calcium (Ca) may be included in the positive electrode active material particle, thereby diffusing a coating element, particularly cobalt (Co), into the inside of the positive electrode active material particle to be coated on a grain boundary between the lithium composite oxide primary particles and controlling a concentration of the coating element, particularly cobalt (Co), on a surface portion of the positive electrode active material particle, so as to enhance a battery performance.

The positive electrode active material according to one aspect of the present invention may include a plurality of the positive electrode active material particles.

The positive electrode active material according to one aspect of the present invention may have a unimodal form, and an average particle diameter (D50) of the positive electrode active material particle may be 1 to 30 µm, more preferably 8 to 20 µm.

In the present specification, D₅₀ may be a particle diameter at 50% of an area cumulative distribution according to a particle diameter, which may be measured by using a laser diffraction method. Specifically, the powder to be measured may be dispersed in a dispersion medium, and then introduced into a commercially available laser diffraction particle size measuring device, so that a difference in diffraction pattern according to particle size may be measured to calculate a particle size distribution when particles pass through a laser beam.

In one aspect, when the positive electrode active material has a unimodal form, the lithium composite oxide particle may be a secondary particle formed by aggregation of a plurality of primary particles, and the primary particle may include one or more crystallites.

In one aspect, the secondary particle may have a multiparticulate form or a polycrystal form including two or more primary particles.

In one more preferred aspect, the secondary particle may have a grain boundary density of 0.50 or more, 0.60 or more, 0.70 or more, 0.80 or more, 0.90 or more, or 0,95 or more, which is calculated by equation 1 below. Grain boundary density = Number of grain boundaries between primary particles placed on the straight line / Number of primary particles placed on the straight line.

The "grain boundary density" may be calculated with respect to a primary particle and a grain boundary between primary particles placed on a straight line passing through a center of a secondary particle and crossing in a minor axis direction in a sectional image photographed by a scanning electron microscope (SEM) with respect to the particle.

To describe as one example, in the case of an unaggregated single particle consisting of a single primary particle, a grain boundary density calculated by above equation 1 may be 0. In addition, when two primary particles are aggregated, a grain boundary density calculated by above equation 1 may be 0.5.

In this case, the grain boundary density may mean an average value for 10 straight lines which are arbitrarily drawn.

In addition, in another more preferred aspect, a positive electrode active material particle included in the positive electrode active material may be a first positive electrode active material particle having an average particle diameter (D50) of 8 µm or more, and the positive electrode active material may have a bimodal form further including a second positive electrode active material particle having an average particle diameter (D50) of 7 µm or less.

In one aspect, if the positive electrode active material has a bimodal form, wl/w2 may be 1.5 to 9.0 or 2.0 to 4.0 when a weight of the first positive electrode active material particles included in the positive electrode active material is w1 and a weight of the second positive electrode active material particles is w2. With regard to a bimodal type positive electrode active material having such a mixing ratio, the present invention may solve the problem of deterioration in battery properties due to a change in an average particle diameter deviation of large particles and small particles, while increasing energy density by the small particles present in voids between the large particles.

In one aspect, when the positive electrode active material of the present invention has a bimodal form, a first lithium composite oxide particle in the first positive electrode active material particle, which is the large particle, may be a secondary particle formed by aggregation of primary particles, and a primary particle of the first lithium composite oxide particle may include one or more crystallites.

In one aspect, the secondary particle of the first lithium composite oxide particle may have a multiparticulate form or a polycrystal form including a plurality of primary particles.

In one aspect, the first lithium composite oxide particle may have a grain boundary density of 0.95 or more, which is calculated by above equation 1.

In one aspect, a second lithium composite oxide particle in the second positive electrode active material particle, which is the small particle, may have a single particle form including one primary particle, and when the primary particle consists of one crystallite, it may have a single crystal form.

In another aspect, the second lithium composite oxide particle may have a multiparticulate form or a polycrystal form including two or more primary particles.

In one aspect, the second lithium composite oxide particle may have a grain boundary density of 0.98 or less, 0.95 or less, 0.90 or less, 0.80 or less, 0.70 or less, 0.60 or less, or 0.50 or less, which is calculated by above equation 1.

A method for preparing a positive electrode active material particle and a positive electrode active material according to one aspect of the present invention is not limited to a preparation method thereof as long as it has the above technical features, but may be prepared as follows as one more preferred aspect.

First, a hydroxide precursor may be prepared.

Then, the prepared hydroxide precursor may be heat-treated to prepare an oxide precursor. In this case, a temperature for heat treatment may be 300°C to 500°C.

After that, the prepared oxide precursor may be mixed with a lithium compound and heat-treated to prepare a lithium composite oxide. In this case, a temperature for heat treatment may be 750°C to 850°C.

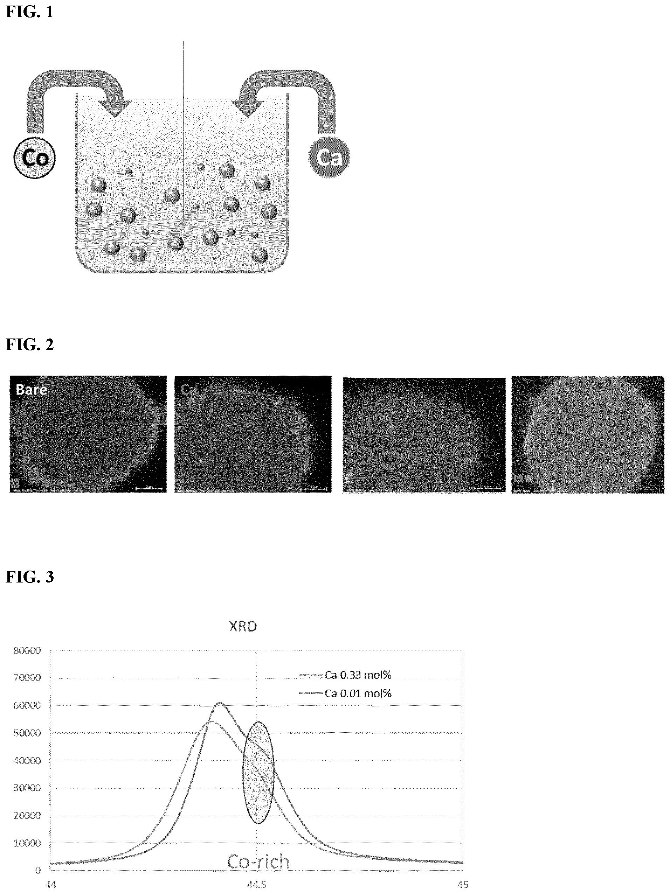

Then, while washing the heat-treated lithium composite oxide with the addition of flushing fluid, a cobalt (Co) aqueous solution and a calcium (Ca) aqueous solution may be added thereto, stirred and dried (see FIG. 1).

After that, the dried product may be heat-treated to prepare a positive electrode active material. In this case, a temperature for heat treatment may be 680°C to 720°C.

The method for preparing the positive electrode active material particle and the positive electrode active material according to one aspect of the present invention may enhance a battery performance by simultaneously carrying out cobalt (Co) wet coating and calcium (Ca) wet doping in the washing of the lithium composite oxide, so as to diffuse cobalt (Co) into the inside of the particle to be coated on a grain boundary between the primary particles and control a content of the coating element on a surface of the lithium composite oxide secondary particle.

Meanwhile, the technical feature of the positive electrode active material particle described above may relate to an average technical feature of a plurality of positive electrode active material particles included in the positive electrode active material.

In the meantime, the meaning of "≤", "or more" "or less" described in the present invention may be replaced with the meaning of "<", "more than" or "less than."

A positive electrode according to one aspect of the present invention may include the positive electrode active material particle described above.

The positive electrode may have a known structure and may be prepared according to a known preparation method except for using the positive electrode active material particle described above. A binder, a conductive material, and a solvent are not particularly limited as long as they may be used on the positive electrode current collector of the secondary battery.

A secondary battery according to one aspect of the present invention may include the positive electrode active material particle described above.

The secondary battery may specifically include a positive electrode, a negative electrode positioned opposite to the positive electrode, and an electrolyte between the positive electrode and the negative electrode, but is not particularly limited as long as it may be used as a secondary battery.

Hereinafter, the exemplary embodiments of the present invention will be described in more detail.

### Preparation of positive electrode active material

### <Example 1>

### (a) Preparation of hydroxide precursor

A hydroxide large particle precursor and a hydroxide small particle precursor designed to have an atomic ratio of Ni:Co:Al=95:4:1 (at%) were synthesized, respectively, through a known co-precipitation method using nickel sulfate, cobalt sulfate and aluminum sulfate.

### (b) Preparation of oxide precursor

The synthesized hydroxide large particle precursor and hydroxide small particle precursor were heated to 2°C per minute, respectively, calcined at 400°C for six hours, and oxidized to be converted into an oxide large particle precursor and an oxide small particle precursor, respectively.

An average particle diameter (D50) of the oxide large particle precursor was 15.0 µm, and an average particle diameter (D50) of the oxide small particle precursor was 3.0 µm.

### (c) Preparation of positive electrode active material

The oxide large particle precursor and the oxide small particle precursor were weighed to have a weight ratio of 70:30, LiOH (Li/(Ni+Co+Al) mol ratio=1.05) was added thereto and mixed, and then the resulting mixture was heated to 2°C per minute and heat-treated for 12 hours up to 800°C in a firing furnace while maintaining an O₂ atmosphere, thereby preparing an intermediate product.

Distilled water was added to the intermediate product, and NaOH was added in an amount of 1.5 wt% based on the lithium composite oxide. Then, 5.0 wt% of a cobalt sulfate aqueous solution was added so that the cobalt derived from the cobalt sulfate aqueous solution was 3.0 mol% based on the metal element (Ni+Co+Al) excluding lithium in the intermediate product, and 0.5 wt% of a calcium nitrate aqueous solution was added so that the calcium derived from the calcium nitrate aqueous solution was 0.01 mol% based on the metal element (Ni+Co+Al) excluding lithium in the intermediate product while stirring, thereby coating a surface of the intermediate product with cobalt. After completion of the reaction, the reaction mixture was dried at 120°C for 12 hours.

The dried product was heated to 2°C per minute up to 700°C while maintaining an O₂ atmosphere in a firing furnace, and heat-treated at 700°C for 12 hours to obtain a bimodal-type positive electrode active material.

### <Example 2>

A positive electrode active material was obtained in the same manner as in Example 1, except that 0.5 wt% of the calcium nitrate aqueous solution was added so that the calcium derived from the calcium nitrate aqueous solution was 0.02 mol% based on the metal element (Ni+Co+Al) excluding lithium in the intermediate product in step (c).

### <Example 3>

A positive electrode active material was obtained in the same manner as in Example 1, except that 0.5 wt% of the calcium nitrate aqueous solution was added so that the calcium derived from the calcium nitrate aqueous solution was 0.03 mol% based on the metal element (Ni+Co+Al) excluding lithium in the intermediate product in step (c).

### <Comparative Example 1>

A positive electrode active material was obtained in the same manner as in Example 1, except that 0.5 wt% of the calcium nitrate aqueous solution was not added in step (c).

### <Comparative Example 2>

A positive electrode active material was obtained in the same manner as in Example 1, except that 0.5 wt% of the calcium nitrate aqueous solution was added so that the calcium derived from the calcium nitrate aqueous solution was 0.33 mol% based on the metal element (Ni+Co+Al) excluding lithium in the intermediate product in step (c).

### Preparation of lithium secondary battery

A positive electrode slurry was prepared by dispersing 92 wt% of each of the positive electrode active materials according to above Examples and Comparative Examples, 4 wt% of artificial graphite, and 4 wt% of a PVDF binder in 30 g of N-methyl-2-pyrrolidone (NMP). The positive electrode slurry was uniformly applied to an aluminum thin film having a thickness of 15 µm and vacuum-dried at 135°C to prepare a positive electrode for a lithium secondary battery.

A coin battery was manufactured by using a lithium foil as a counter electrode with respect to the positive electrode, a porous polyethylene film (Celgard 2300, thickness: 25 µm) as a separator, and an electrolyte solution in which LiPF6 was present at a concentration of 1.15 M in a solvent in which ethylene carbonate and ethyl methyl carbonate were mixed at a volume ratio of 3:7.

### <Experimental Example 1> Analysis of surface cobalt (Co) content

The results of determining an average concentration of the cobalt (Co) measured by Energy Profiling-Energy Dispersive X-Ray Spectroscopy (EP-EDS) which measures an average concentration of the element from a surface of the positive electrode active material particle to a depth at which an electron beam penetrates using the electron beam irradiated at an acceleration voltage of 3 kV with respect to the surface of the positive electrode active material particles according to above Examples and Comparative Examples are shown in table 1 below.

The Energy Profiling-Energy Dispersive X-Ray Spectroscopy (EP-EDS) was measured by scanning an electron beam accelerated to a voltage of 3 kV to the surface of the positive electrode active material particles using a Scanning Electron Microscope (SEM; Hitachi Co.) and analyzing EDS components.

**<Table 1>**

| | **Dopant content** | **3kV Co concentration** |
|---|---|---|
| **Unit** | **mol%** | **At%** |
| **Example 1** | 0.01 | 35.5 |
| **Example 2** | 0.02 | 35.1 |
| **Example 3** | 0.03 | 34.4 |
| **Comparative Example 1** | 0 | 37.9 |
| **Comparative Example 2** | 0.33 | 33.3 |

### <Experimental Example 2>

The results of battery properties measured for the lithium secondary batteries according to above Examples and Comparative Examples are shown in table 2 below.

With regard to measurement of a charge/discharge capacity, an initial charge capacity and an initial discharge capacity were measured through a charge/discharge experiment using an electrochemical analysis device (Toyo, Toscat-3100) to which 25°C, a voltage range of 3.0 V to 4.25 V, and a discharge rate of 0.2 C were applied, and efficiency was calculated.

A lifespan was measured by performing charge/discharge 50 times under the condition of 45°C and 1C/1C within a driving voltage range of 3.0 V to 4.3 V for the same lithium secondary battery and then measuring a ratio of a discharge capacity at a 50th cycle to an initial discharge capacity (cycle capacity retention rate).

**<Table 2>**

| | **Charge capacity** | **Discharge capacity** | **Efficiency** | **Lifespan** |
|---|---|---|---|---|
| **Unit** | **mAh/g** | **mAh/g** | **%** | **%** |
| **Example 1** | 238.9 | 212.0 | 88.8% | 83.5% |
| **Example 2** | 239.2 | 211.6 | 88.5% | 81.5% |
| **Example 3** | 239.2 | 212.0 | 88.6% | 80.3% |
| **Comparative Example 1** | 237.8 | 209.9 | 88.3% | 78.4% |
| **Comparative Example 2** | 238.4 | 211.4 | 88.7% | 77.8% |

According to above table 2, it can be confirmed that the charge/discharge capacity and lifespan properties are remarkably improved in Examples compared to Comparative Examples.

### <Experimental Example 3> Measurement of sectional EDS image

Sectional EDS images of the large particles included in the positive electrode active materials according to above Examples and Comparative Examples are shown in FIG. 2.

According to FIG. 2, it can be confirmed that cobalt (Co) and calcium (Ca) are diffused into the positive electrode active material particles by the calcium (Ca) wet coating, and the cobalt (Co) concentration is adjusted at the surface portion of the positive electrode active material particle.

### <Experimental Example 4> XRD measurement

The results of X-ray diffraction (XRD) analysis of the positive electrode active materials according to above Examples and Comparative Examples using CuKα rays are shown in FIG. 3.

For X-ray diffraction (XRD) analysis in the present invention, a step size (°/step) was measured at 0.01 °/step, and a measurement time per step was measured at 0.1 s/step by using a Bruker D8 Advance diffractometer using CuKα radiation (1.540598Å).

According to FIG. 3, as the content of added calcium (Ca) increases, the intensity of Co-rich peak decreases, and thus it can be confirmed that calcium (Ca) is doped into the lattice structure of the primary particles.

## Claims

1. A positive electrode active material particle comprising a lithium composite oxide particle and a coating material including a coating element, wherein
the lithium composite oxide particle is a secondary particle formed by aggregation of two or more primary particles,
the coating material is comprised on a surface of the secondary particle,
the coating material is comprised in a grain boundary between the primary particles, calcium (Ca) is comprised in the positive electrode active material particle, and
a content X of calcium (Ca) comprised in the positive electrode active material particle is 0.003 mol% ≤ X ≤ 0.03 mol%.

2. The positive electrode active material particle of claim 1, wherein an average concentration Y of the coating element measured by Energy Profiling-Energy Dispersive X-Ray Spectroscopy (EP-EDS) which measures an average concentration of the element from a surface of the positive electrode active material particle to a depth at which an electron beam penetrates using the electron beam irradiated at an acceleration voltage of 3 kV with respect to the surface of the positive electrode active material particle is 32 at% ≤ Y ≤ 37 at%.

3. The positive electrode active material particle of claim 1, wherein the coating element is cobalt (Co) and the coating material is a cobalt (Co) oxide.

4. The positive electrode active material particle of claim 1, wherein the positive electrode active material particle comprises cobalt (Co), and an average concentration Y of cobalt (Co) measured by Energy Profiling-Energy Dispersive X-Ray Spectroscopy (EP-EDS) which measures an average concentration of the element from a surface of the positive electrode active material particle to a depth at which an electron beam penetrates using the electron beam irradiated at an acceleration voltage of 3 kV with respect to the surface of the positive electrode active material particle is 32 at% ≤ Y ≤ 37 at%.

5. The positive electrode active material particle of claim 1, wherein the calcium (Ca) is comprised in a form of a calcium (Ca) oxide on the surface of the secondary particle in the positive electrode active material particle.

6. The positive electrode active material particle of claim 1, wherein the calcium (Ca) is comprised in a form of a calcium (Ca) oxide in the grain boundary between the primary particles in the positive electrode active material particle.

7. A positive electrode active material comprising a plurality of the positive electrode active material particles of claim 1.

8. The positive electrode active material of claim 7, wherein the positive electrode active material particle is a first positive electrode active material particle having an average particle diameter (D50) of 8 µm or more, and
the positive electrode active material further comprises a second positive electrode active material particle having an average particle diameter (D50) of 7 µm or less.

9. The positive electrode active material of claim 8, wherein w1/w2 is 1.5 to 9.0 or less when a weight of the first positive electrode active material particles is w1 and a weight of the second positive electrode active material particles is w2.

10. A positive electrode comprising the positive electrode active material particle of claim 1.

11. A secondary battery comprising the positive electrode active material particle of claim 1.
